# EUROPÄISCHE PATENTSCHRIFT

(11) **EP 1 446 606 B1**
(45) Veröffentlichungstag und Bekanntmachung des Hinweises auf die Patenterteilung: **17.06.2009**
(21) Anmeldenummer: 02796542.5
(22) Anmeldetag: 05.11.2002
(51) Int. Cl.: F16L 37/30

(54) **KUPPLUNG FÜR KRYOGENE MEDIEN**
COUPLING FOR CRYOGENIC MEDIA
RACCORD POUR MILIEUX CRYOGENIQUES

(30) Priorität: 19.11.2001 DE 10156740
(43) Veröffentlichungstag der Anmeldung: 18.08.2004
(73) Patentinhaber: Linde Aktiengesellschaft, 80807 München (DE)
(72) Erfinder: REESE, Wilfried-Henning, 85716 Unterschleissheim (DE)
(74) Vertreter: Zahn, Christoph
(86) Internationale Anmeldenummer: PCT/EP2002/012348
(87) Internationale Veröffentlichungsnummer: WO 2003/044417

(56) Entgegenhaltungen:
- EP-A- 0 574 811
- DE-A- 4 104 711
- DE-A- 10 001 207

## Beschreibung

Die Erfindung betrifft eine Kupplung, insbesondere für kryogene Medien und verflüssigtes Erdgas, mit
- einem ein- oder mehradrigen Kupplungsstecker und einer Kupplungsdose,
wobei sich im zusammengekuppelten Zustand ein Leitungsrohr des Kupplungssteckers, das in axialer Richtung beweglich zum Kupplungsstecker ausgebildet ist, über die Trennebene hinaus in die Kupplungsdose hinein - erstreckt bzw. erstreckbar ist,
- einem steckerseitigen Kugelhahn,
- einem dosenseitigen Kugelhahn,
- wobei die Kugelhähne für die Durchführung des Leitungsrohres ausgebildet sind, und
- Mitteln zum Öffnen und Schließen der Kugelhähne.

Die Erfindung betrifft ferner die Verwendung einer derartigen Kupplung.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff. Des Weiteren werden die Begriffe "CNG" und "LNG" für komprimiertes bzw. verflüssigtes Erdgas verwendet.

Insbesondere Wasserstoff und Erdgas gewinnen gegenwärtig durch den steigenden Energiebedarf und das gestiegene Umweltbewußtsein als Energieträger zunehmend an Bedeutung. So werden bereits Lastkraftwagen, Busse, Personenkraftwagen und Lokomotiven mittels mit Erdgas- oder Wasserstoff-betriebenen Motoren angetrieben. Darüber hinaus sind erste Versuche im Gange, Flugzeuge mit den genannten Medien anzutreiben.

Die Speicherung des Wasserstoffs oder Erdgases "an Bord" der oben genannten Verkehrsmittel ist dabei in flüssiger Form am sinnvollsten. Zwar müssen der Wasserstoff und LNG dazu auf etwa 25 K bzw. 112 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ und CNG in der Regel in den obengenannten Verkehrsmitteln ungünstiger, da die Speicherung hierbei in großvolumigen und schweren Speicherbehältern bei hohen Drücken erfolgen muss.

Aus der DE-A 41 04 711 ist eine gattungsgemäße Kupplung bekannt. Das Prinzip einer derartigen Kupplung basiert auf einem System, bei welchem zwei Kugelhähne - einer auf der Steckerseite und einer auf der Dosenseite - miteinander verflanscht werden. Anschließend fährt von der Steckerseite her durch die Durchgangsbohrungen der Kugelhähne ein vakuumisoliertes Füllrohr hindurch, durch welches das (kryogene) Medium zur Kupplungsdosenseite strömt. Nach dem Füllvorgang fährt der Stecker zurück, und die Kugelhähne werden wieder geschlossen. Anschließend wird die Verflanschung der Kugelhähne getrennt. Eine derartige Betankungskupplung ermöglicht ein Überfüllen von (kryogenen) Flüssigkeiten, ohne dass äußerlich eine Abkühlung der sichtbaren Komponenten zu erkennen ist.

Bei der Anwendung des vorbeschriebenen Prinzips ist es notwendig, den steckerseitigen Kugelhahn und den dosenseitigen Kugelhahn durch eine 90°-Drehung der Kugeln zu öffnen bzw. zu schließen. Dieser Betätigungsvorgang wird bisher durch einen Handhebel durchgeführt, welcher- wie in üblicher Weise für Kugelhähne verwendet - die Kugel durch eine 90°-Drehung öffnet bzw. schließt. Durch einen Zahnradantrieb, welcher bei dem Verbinden der Kupplungshälften in Eingriff kommt, wird gleichzeitig der dosenseitige Kugelhahn geöffnet bzw. geschlossen.

Für automatische Anwendungen, bspw. mittels sog. Betankungsroboter, besteht die Möglichkeit, den steckerseitigen Kugelhahn mit einem hydraulischen bzw. pneumatischen Antrieb zu betätigen. Der dosenseitige Kugelhahn wird in gleicher Weise wie bei der Handbetätigung über ein Zahnrad, welches während des Zusammendockens der Kupplungsflansche in Eingriff kommen, geöffnet.

Nachteilig hierbei ist jedoch, dass auf Grund der geometrischen Gegebenheiten die Zahnräder in Eingriff kommen müssen bevor sich die Flansche berühren. Ein exaktes Ineinandergreifen der Zähne während des Andockvorganges erfordert aber eine sehr gute Achsführung der Steckerseite relativ zur Dosenseite. Auf Grund der äußerst begrenzten Platzverhältnisse lässt sich eine Führung, bspw. eine Konusführung, in der erforderlichen Form nicht einsetzen. Ein erfolgreicher Andockvorgang ist daher vom Geschick des Bedienpersonals bzw. von der Sensorik und der exakten Steuerung des Betankungsroboters abhängig.

Des Weiteren müssen beim Andockvorgang die Verdrehachsen der Kugelhähne auf einer Ebene liegen, damit die Zähne des Zahnradantriebes ebenfalls in einer Ebene in Eingriff sind.

Zusätzlich muss gewährleistet sein, dass während des Andockens der Zahnkopf der einen Seite in einen Zahnfuß der Gegenseite greift. Falls zwei Zahnköpfe voreinander stoßen, ist ein Verbinden der Flansche nicht möglich.

Zusätzlich sind die Zahnräder durch ihre exponierte Anordnung einer starken Verschmutzung durch Witterungseinflüsse ausgesetzt. Durch die engen Toleranzen, welche bei einer Verzahnung vorliegen, kann eine Verschmutzung zum Verklemmen der Zahnräder und zu erhöhtem Verschleiß führen.

Der vorliegende Erfindung liegt die Aufgabe zu Grunde, eine gattungsgemäße Kupplung, insbesondere für kryogene Medien und verflüssigtes Erdgas, anzugeben, die die vorgenannten Nachteile vermeidet.

Dies wird erfindungsgemäß dadurch erreicht, dass
- die Mittel zum Öffnen und Schließen der Kugelhähne als ein dem Kupplungsstecker zugeordneter, in Längsrichtung des Kupplungssteckers verschiebbarer Verdrehring und ein der Kupplungsdose zugeordneter Verdrehring, der mit dem dosenseitigen Kugelhahn in Wirkverbindung steht, ausgebildet sind,
- die Verdrehringe um die Längsachse von Kupplungsstecker und Kupplungsdose drehbar sind,
- die Verdrehringe Mittel zum kraft- und/oder formschlüssigen Verbinden miteinander aufweisen, und
- der dem Kupplungsstecker zugeordnete Verdrehring mit dem steckerseitigen Kugelhahn in Wirkverbindung steht und/oder dem steckerseitigen Kugelhahn eine beliebige Antriebseinrichtung zugeordnet ist.

Erfindungsgemäß werden die beiden Kugelhähne nunmehr nicht unmittelbar beim Verbinden von Kupplungsstecker und Kupplungsdose miteinander verbunden bzw. in Wirkverbindung gebracht, sondern erst dann, wenn der eigentliche Verbindungsvorgang zwischen Kupplungsstecker und Kupplungsdose bereits beendet ist. Somit können die Kupplungsflansche zunächst in der üblichen Weise miteinander verbunden werden, ohne dass jedoch - wie bisher - Restriktionen durch nicht exakte Achsführung und Achsausrichtung und Ineinandergreifen von Zahnradpaaren auftreten können.

Es ist nicht zwingend erforderlich, dass der dem Kupplungsstecker zugeordnete Verdrehring als ein vollständiger Ring ausgebildet ist; vielmehr ist es ausreichend, wenn dieser aus Teilringen oder Ringteilkörpern besteht.

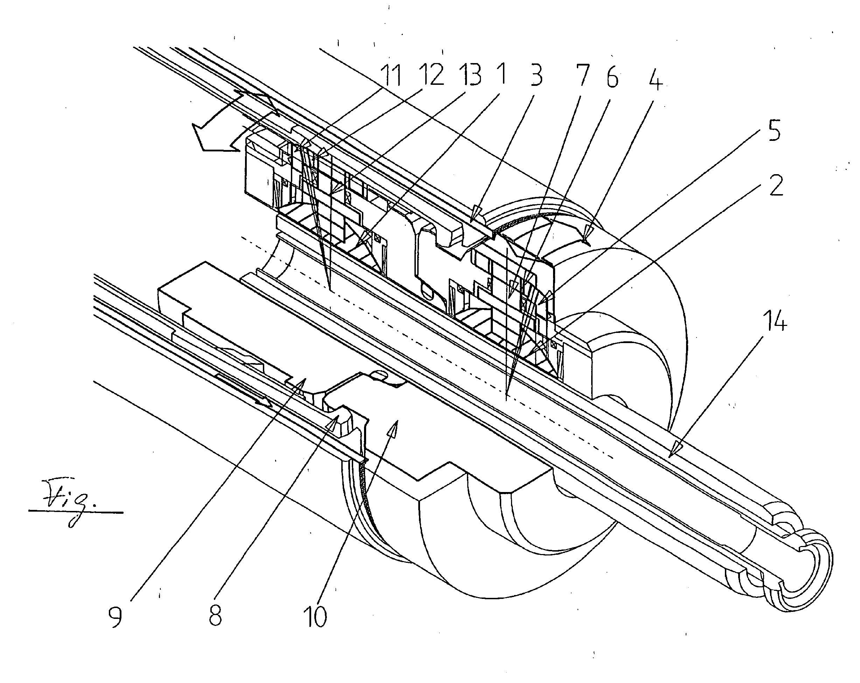

Die erfindungsgemäße Kupplung sowie weitere Ausgestaltungen derselben seien anhand des in der Figur dargestellten Ausführungsbeispieles näher erläutert. Diese zeigt eine perspektivische Teilschnittdarstellung einer möglichen Ausführungsform der erfindungsgemäßen Kupplung.

Die Kupplung weist einen steckerseitigen Flansch 9 und einen dosenseitigen Flansch 10 auf, die mittels einer Verklammerung 8 formschlüssig miteinander verbunden werden. Der eigentliche Kupplungsvorgang zwischen Kupplungsstecker und Kupplungsdose ist dann beendet, wenn die Verklammerung 8 der beiden Flansche 9 und 10 erfolgt ist.

Erfingdungsgemäß weist die Kupplung einen steckerseitigen Verdrehring 3 sowie einen dosenseitigen Verdrehring 4 auf. Beide Verdrehringe 3 und 4 sind um die Längsachse von Kupplungsstecker und Kupplungsdose drehbar (dargestellt durch die beiden breiten Pfeile); zudem ist der steckerseitige Verdrehring 3 in Längsrichtung des Kupplungssteckers verschiebbar (dargestellt durch den schmalen Pfeil). Während der steckerseitige Verdrehring 3 mit dem steckerseitigen Kugelhahn 1 in Wirkverbindung steht, steht der dosenseitige Verdrehring 4 mit dem dosenseitigen Kugelhahn 2 in Wirkverbindung.

Der dem Kupplungsstecker zugeordnete Verdrehring 3 muss jedoch nicht zwangsläufig mit dem steckerseitigen Kugelhahn 1 in Wirkverbindung stehen; denkbar ist auch, dass der steckerseitige Kugelhahn 1 alternativ oder zusätzlich mittels einer beliebigen Antriebseinrichtung - wie bspw. einem von dem dem Kupplungsstecker zugeordneten Verdrehring 3 unabhängigen, weiteren Verdrehring, einem hydraulischen bzw. pneumatischen Kolbenantrieb, einem elektromotorischen Antrieb, etc. - bewegt wird.

Sofern Kupplungsstecker und Kupplungsdose bzw. deren Flansche 9 und 10 miteinander verklammert sind (8), erfolgt das Öffnen der Kugelhähne 1 und 2 bei der in der Figur dargestellten Ausführungsform der erfindungsgemäßen Kupplung dadurch, dass der steckerseitige Verdrehring 3 mit einer definierten Vorschubkraft in Richtung des dosenseitigen Verdrehringes 4 verschoben wird. Vorzugsweise weisen die beiden Verdrehringe 3 und 4 an ihren Stirnseiten Kerben auf, so dass sie form- und kraftschlüssig miteinander verbunden werden können. Dies geschieht dadurch, dass die Kerben des steckerseitigen Verdrehringes 3 mit den Kerben des dosenseitigen Verdrehringes 4 in Eingriff kommen.

Nunmehr wird durch den Kunden, das Bedienpersonal und/oder automatisch der steckerseitige Verdrehring 3 um seine Längsachse gedreht; hierbei wird vorzugsweise die definierte Vorschubkraft aufrecht erhalten. Die Verschiebe- und/oder Drehbewegung des steckerseitigen Verdrehrings 3-kann hierbei mittels eines hydraulischen, pneumatischen oder elektrischen Antriebes erfolgen.

Sind die beiden Verdrehringe 3 und 4 bereits in Eingriff, wird der dosenseitige Verdrehring 4 durch den Form- und Kraftschluss der Kerben sofort mitgedreht. Sofern noch kein Eingriff zwischen den beiden Verdrehringen 3 und 4 besteht, da beispielsweise die Kerbköpfe voneinander stoßen, dreht sich der steckerseitige Verdrehring zunächst um eine Kerbkopfbreite, ohne dass der dosenseitige Verdrehring mitbewegt wird. Anschließend erfolgt jedoch der Eingriff des steckerseitigen Kerbkopfes in den Kerbfuß des dosenseitigen Drehringes 4, sofern die definierte Vorschubkraft des steckerfertigen Verdrehringes 3 aufrecht erhalten wurde. Der durch die vorbeschriebene geringfügige Verdrehung erfolgte Winkelunterschied ist - verglichen mit dem sofortigen Ineinandergreifen der beiden Verdrehringe 3 und 4 - aufgrund der minimalen Größe des Winkels tolerierbar.

Die beiden Verdrehringe 3 und 4 sind mit Tellerrädern 5 und 11 verbunden, welche sich in einem äußerlich nicht sichtbaren und vor Verschmutzung geschützten Bereich der jeweiligen Anschlussseite befinden. Die vorgenannten Tellerräder 5 und 11 treiben über Ritzel 6 und 12 die Antriebswellen 7 und 13 der Kugelhähne 1 und 2 an.

Eine definierte Winkelverdrehung der Verdrehringe 3 und 4 hat damit eine durch die Übersetzung der Teller- und Kegelräder definierte 90°-Verdrehung der Kugelhähne 1 und 2 bzw. deren Kugeln zur Folge.

Bei der in der Figur dargestellten Ausführungsform der erfindungsgemäßen Kupplung werden die beiden Kugelhähne 1 und 2 zeitgleich geöffnet bzw. geschlossen. Sofern der steckerseitige Kugelhahn 1 mittels einer anderen als der vorbeschriebenen Antriebseinrichtung bewegt wird, kann dieser auch zeitlich versetzt von dem dosenseitigen Kugelhahn 2 geöffnet bzw. geschlossen werden.

Sobald die Kugelhähne 1 und 2 geöffnet sind, fährt das vakuumisolierte Füllrohr 14 durch die Durchgangsbohrungen der Kugelhähne 1 und 2 hindurch und der Befüllvorgang kann beginnen. Nach Beendigung des Befüllvorganges werden das Füllrohr 14 zurückgezogen und die Kugelhähne 1 und 2 in umgekehrter Schrittfolge wieder geschlossen. Nachdem der steckerseitige Verdrehring 3 wieder zurückgefahren ist, können die Verklammerung 8 der Kupplungsflansche 9 und 10 geöffnet und so Kupplungsstecker und Kupplungsdose voneinander getrennt werden.

Alternativ zu den vorbeschriebenen Kerben, können die Verdrehringe 3 und 4 bzw. deren aufeinander stoßende Kopfseiten auch einen Reibbelag bzw. Reibbeläge aufweisen. Denkbar ist ferner eine konische Ausführung der Kopfseiten der Verdrehringe 3 und 4. Das zum Verdrehen der Kugeln der Kugelhähne 1 und 2 erforderliche Drehmoment wird dann durch Reibung übertragen. Die dazu notwendige Normalkraft (Druckkraft) wird über die oben erläuterte definierte Vorschubkraft des steckerseitigen Verdrehringes 3 erzeugt.

## Patentansprüche

1. Kupplung, insbesondere für kryogene Medien und verflüssigtes Erdgas mit
- einem ein- oder mehradrigen Kupptungsstecker (9) und einer Kupplungsdose (10), wobei sich im zusammengekuppelten Zustand ein Leitungsrohr (14) des Kupplungssteckers (9), das in axialer Richtung beweglich zum Kupplungsstecker (9) ausgebildet ist, über eine Trennebene hinaus in die Kupplungsdose hinein erstreckt bzw. erstreckbar ist,
- einem steckerseitigen Kugelhahn (1)
- einem dosenseitigen Kugelhahn (2)
- wobei die Kugelhähne (1,2) für die Durchführung des Leitungsrohres (14) ausgebildet sind, und
- Mitteln zum Öffnen und Schließen der Kugelhähne (1,2),
**dadurch gekennzeichnet, dass**
- die Mittel zum Öffnen und Schließen der Kugelhähne (1, 2) als ein dem Kupplungsstecker zugeordneter, in Längsrichtung des Kupplungssteckers verschiebbarer Verdrehring (3) und ein der Kupplungsdose zugeordneter Verdrehring (4), der mit dem dosenseitigen Kugelhahn (2) in Wirkverbindung steht, ausgebildet sind,
- die Verdrehringe (3, 4) um die Längsachse von Kupplungsstecker und Kupplungsdose drehbar sind,
- die Verdrehringe (3, 4) Mittel zum kraft- und/oder formschlüssigen Verbinden miteinander aufweisen, und
- der dem Kupplungsstecker zugeordnete Verdrehring (3) mit dem steckerseitigen Kugelhahn (1) in Wirkverbindung steht

2. Kupplung für kryogene Medien nach Anspruch 1, **dadurch gekennzeichnet, dass** der dem Kupplungsstecker zugeordnete Verdrehring (3) aus Teilringen oder Ringteilkörpem besteht.

3. Kupplung für kryogene Medien nach Anspruch 1 oder 2, **dadurch gekennzeichnet, dass** der dem Kupplungsstecker zugeordnete Verdrehring (3) und/oder der der Kupplungsdose zugeordnete Verdrehringe (4) über Tellerräder und/oder Ritzeln mit den Antriebswellen der Kugelhähne (1, 2) in Wirkverbindung stehen.

4. Kupplung für kryogene Medien nach einem der vorhergehenden Ansprüche 1 bis 3, **dadurch gekennzeichnet, dass** auf den dem Kupplungsstecker zugeordneten Verdrehring (3) eine Kraft, vorzugsweise in Richtung des der Kupplungsdose zugeordneten Verdrehringes (4), aufbringbar ist.

5. Verwendung einer Kupplung für kryogene Medien nach einem der vorhergehenden Ansprüche 1 bis 4 als Betankungskupplung für Kraftfahrzeuge aller Art, insbesondere für Kraftfahrzeuge aller Art, die mit flüssigem Wasserstoff und/oder verflüssigtem Erdgas betrieben werden.

## Claims

1. Coupling, in particular for cryogenic media and liquefied natural gas, with
- a single-vein or multi-vein coupling plug (9) and a coupling socket (10), in the coupled-together state a line pipe (14) of the coupling plug (9), which line pipe (14) is designed movably with respect to the coupling plug (9) in the axial direction, extending or extendable beyond a parting plane into the coupling socket,
- a plug-side ball valve (1)
- a socket-side ball valve (2),
- the ball valve (1, 2) being designed for the leadthrough of the line pipe (14), and
- means for opening and closing the ball valves (1, 2),
**characterized in that**
- the means for opening and closing the ball valves (1, 2) are designed as a turning ring (3), assigned to the coupling plug and displaceable in the longitudinal direction of the coupling plug, and a turning ring (4), assigned to the coupling socket and operatively connected to the socket-side ball valve (2),
- the turning rings (3, 4) being rotatable about the longitudinal axis of the coupling plug or coupling socket,
- the turning rings (3, 4) having means for non-positive and/or positive connection to one another, and
- the turning ring (3) assigned to the coupling plug is operatively connected to the plug-side ball valve (1).

2. Coupling for cryogenic media according to Claim 1, **characterized in that** the turning ring (3) assigned to the coupling plug consists of part-rings or ring part-bodies.

3. Coupling for the cryogenic media according to Claim 1 or 2, **characterized in that** the turning ring (3) assigned to the coupling plug and/or the turning ring (4) assigned to the coupling socket and/is operatively connected to the drive shafts of the ball valves (1, 2) via crown wheels and/or pinions.

4. Coupling for cryogenic media according to one of the preceding Claims 1 to 3, **characterized in that** a force, preferably in the direction of the turning ring (4) assigned to the coupling socket, can be applied to the turning ring (3) assigned to the coupling plug.

5. Use of a coupling for cryogenic media according to one of the preceding Claims 1 to 4 as a tank-filling coupling for motor vehicles of all types, in particular for motor vehicles of all types which are operated with liquid hydrogen and/or liquefied natural gas.

## Revendications

1. Raccord, en particulier pour milieux cryogéniques et gaz naturel liquéfié, comprenant :
- une fiche mâle (9) à un ou plusieurs brins et une prise femelle (10), un tube de ligne (14) de la fiche mâle (9), qui est réalisé de manière déplaçable dans la direction axiale par rapport à la fiche mâle (9) s'étendant ou pouvant s'étendre au-delà d'un plan de séparation dans la prise femelle,
- un robinet à boisseau sphérique (1) du côté de la fiche mâle,
- un robinet à boisseau sphérique (2) du côté de la prise femelle,
- les robinets à boisseau sphérique (1, 2) étant réalisés pour le passage du tube de ligne (14), et
- des moyens pour ouvrir et fermer les robinets à boisseau sphérique (1, 2),
**caractérisé en ce que**
- les moyens pour ouvrir et fermer les robinets à boisseau sphérique (1, 2) sont réalisés sous forme d'une bague rotative (3) associée à la fiche mâle et pouvant être déplacée dans la direction longitudinale de la fiche mâle et d'une bague rotative (4) associée à la prise femelle, qui est en liaison fonctionnelle avec le robinet à boisseau sphérique (2) du côté de la prise femelle,
- les bagues rotatives (3, 4) peuvent tourner autour de l'axe longitudinal de la fiche mâle et de la prise femelle,
- les bagues rotatives (3, 4) présentent des moyens pour la connexion mutuelle par engagement par force et/ou par coopération de forme, et
- la bague rotative (3) associée à la fiche mâle est en liaison fonctionnelle avec le robinet à boisseau sphérique (1) du côté de la fiche mâle.

2. Raccord pour milieux cryogéniques selon la revendication 1, **caractérisé en ce que** la bague rotative (3) associée à la fiche mâle se compose de bagues partielles ou de corps de bague partiels.

3. Raccord pour milieux cryogéniques selon la revendication 1 ou 2, **caractérisé en ce que** la bague rotative (3) associée à la fiche mâle et/ou la bague rotative (4) associée à la prise femelle sont en liaison fonctionnelle avec les arbres d'entraînement des robinets à boisseau sphérique (1, 2) par le biais de couronnes et/ou de pignons.

4. Raccord pour milieux cryogéniques selon l'une quelconque des revendications précédentes 1 à 3, **caractérisé en ce qu'**une force, de préférence dans la direction de la bague rotative (4) associée à la prise femelle, peut être appliquée sur la bague rotative (3) associée à la fiche mâle.

5. Utilisation d'un raccord pour milieux cryogéniques selon l'une quelconque des revendications précédentes 1 à 4, en tant que raccord pour le remplissage de véhicules automobiles de tous types, notamment pour des véhicules automobiles de tous types qui fonctionnent avec de l'hydrogène liquide et/ou du gaz naturel liquéfié.
